# EUROPÄISCHE PATENTSCHRIFT

(11) **EP 1 597 511 B1**
(45) Veröffentlichungstag und Bekanntmachung des Hinweises auf die Patenterteilung: **02.11.2011**
(21) Anmeldenummer: 04710013.6
(22) Anmeldetag: 11.02.2004
(51) Int. Cl.: B23Q 11/08

(54) **LÄNGENVARIABLE SCHUTZABDECKUNG**
EXTENDABLE PROTECTIVE COVERING
COUVERTURE DE PROTECTION DE LONGUEUR VARIABLE

(30) Priorität: 24.02.2003 DE 10308024
(43) Veröffentlichungstag der Anmeldung: 23.11.2005
(73) Patentinhaber: HEMA Maschinen- und Apparateschutz GmbH, 63500 Seligenstadt (DE)
(72) Erfinder: WALTER, Dieter, 63500 Seligenstadt (DE); WALTER, Steffen, 63110 Rodgau-Jügeshem (DE)
(74) Vertreter: Erb, Henning
(86) Internationale Anmeldenummer: PCT/EP2004/001245
(87) Internationale Veröffentlichungsnummer: WO 2004/074736

(56) Entgegenhaltungen:
- EP-A- 0 673 712
- DE-A1- 1 777 122
- DE-B- 1 178 260
- DE-C- 954 304
- DE-U- 20 108 661
- DE-U- 20 303 071
- US-A- 4 072 179

## Beschreibung

Die Erfindung betrifft eine längenvariable, faltenbalgfreie Schutzabdeckung nach dem Oberbegriff des beigefügten Anspruches 1

Bekannt sind im Zusammenhang mit längenvariablen, faltenbalgfreien Schutzabdeckungen aus der DE 954304C und der P0673712A sogenannte Metallabdeckungen mit sich gegenseitig schuppenartig überlappenden, aufeinander gleitenden Blechstreifen. Hierbei besteht das Problem der Erzielung einer einwandfreien Führung der Blechstreifen und eines gleichmäßigen Auszuges sowie Einschubes der Schutzabdeckung.

Derartige Schutzabdeckungen stellen eine sinnvolle Alternative zu relativ aufwendigen sogenannten Faltenbälgen mit in die Falten eines Kunststoffbalgs eingearbeiteten Versteifungsstegen und daran angebrachten, sich gegenseitig schuppenartig überlappenden, aufeinander gleitenden Schutzlamellen, wie aus der DE 201 08 661 U bekannt, dar. Auch hierbei besteht ohne zusätzliche Maßnahmen häufig das Problem einer einwandfreien Führung und eines gleichmäßigen Auszuges sowie Einschubes der einzelnen Bereiche der Schutzabdeckung. Die 17 77 122A1 zeigt eine weitere Schutzabdeckung.

Die Aufgabe der vorliegenden Erfindung besteht darin, eine altenbaigfreie Schutzabdeckung der eingangs genannten Art mit einfachen Maßnahmen so auszubilden, daß sie bei guten Führungseigenschaften sowie stabiler Ausbildung ohne zusätzliche Maßnahmen gleichmäßig verteilte Längenänderungseigenschaften gewährleistet.

Zur Lötung der gestellten Aufgabe wird eine faltenbalgfreie Schutzabdeckung mit den Merkmalen des Anspruches 1 vorgeschlagen.

Eine solche Schutzabdeckung hat ausgesprochen gute gegenseitige Führungseigenschaften der einzelnen Schutzelemente und eine optimale Seitenstabilität. Durch die gegenseitige Abfederung der einzelnen Schutzelemente verteilen sich deren Längsverschiebungen gleichmäßig über die Länge der Schutzabdeckung. Hierzu sind keine zusätzlichen Maßnahmen erforderlich, wie beispielsweise bewegungssynchronisierende Scheren oder dergleichen. Die gleichmäßigen Verschiebungen führen ferner zu einer gleichmäßigen Beanspruchung aller Schutzelemente und somit zu einer längeren Lebensdauer. Außerdem gewährleistet eine solche Schutzabdeckung einen laufruhigen und besonders schnellen sowie schonenden Bewegungsablauf.

Gemäß den weiteren Ausgestaltungen der Ansprüche 2 bis 4 können die federnden Koppelglieder als Druckelemente, Zugelemente oder als kombinierte Druck- und Zugelemente ausgebildet oder eingebaut und entsprechend mit den Schutzelementen verbunden oder verbindbar sein. Im Falle von Druckelementen genügt es an sich, daß diese zwischen benachbarten Schutzelemente angeordnet sind. Sie können auch beispielsweise mit einem Schutzelemente verbunden sein. Im Verbund der Schutzabdeckung sind sie dann zwischen zwei Schutzelementen bewegungspuffernd unter Druck eingespannt, um bei einer Verkürzung der Schutzabdeckung weiter zusammengedrückt zu werden. Im Falle von Zugelementen sind diese mit beiden benachbarten Schutzelementen verbunden oder verbindbar und zwischen diesen unter Zug eingespannt, und um bei einer Verkürzung der Schutzabdeckung zumindest teilweise entlastet zu werden. Im Falle kombinierter Druck- und Zugelemente können diese während des Bewegungsablaufs abwechselnd unter Druck- und Zugspannung geraten, so daß sie auch in diesem Falle mit beiden benachbarten Schutzelementen verbunden oder verbindbar sind. Bei einer solchen Version gibt es eine neutrale Zwischenstellung, bei der die Koppelglieder entlastet sind. In allen Fällen sorgen die Koppelglieder für eine sehr einfache, gleichmäßige und ausgesprochen wirkungsvolle Verteilung bzw. Synchronisierung der Längsbewegungen der einzelnen Schutzelemente der Schutzabdeckung. Falls Koppelglieder verwendet werden, die mit beiden angrenzenden Schutzelementen verbunden sind, besteht die Schutzabdeckung aus einem zusammenhängenden Verbund mehrerer Schutzelemente.

Gemäß den Ansprüchen 5 und 6 können die Koppelglieder als Federn oder im Falle von Druckelementen als einfache Druckpuffer ausgebildet sein.

Nach den Ansprüchen 7 bis 10 ist es vorteilhaft, die Koppelglieder verdeckt im Inneren der Schutzabdeckung und über die Länge der Schutzelemente gleichmäßig verteilt anzuordnen. Dadurch ergibt sich eine sehr kompakte, stabile und optisch ansprechende Bauform mit besonders einheitlichem Bewegungsverhalten und gleichmäßiger Kraftübertragung.

Die federnden Koppelglieder können gemäß Anspruch 11 in Ausgangslage der Schutzabdeckung 10 druck- bzw. zugentlastet, also entspannt, sein, um erst bei einer Längenveränderung der Schutzabdeckung in einen Spannungszustand, wie einen Druck- oder Zugspannungszustand, zu gelangen. Stattdessen können die federnden Koppelglieder gemäß Anspruch 12 in Ausgangslage bereits unter Vorspannung stehen, um bei einer Längenänderung der Schutzabdeckung weiter entlastet oder gespannt zu werden.

In weiterer Ausgestaltung der Ansprüche 13 und 14 kann jedes federnde Koppelglied auch mehr als zwei Schutzelementen zugeordnet und mit diesen verbunden sein - beispielsweise können sich die Koppelglieder über die gesamte Länge der Schutzabdeckung erstrecken. In diesem Zusammenhang haben sich gemäß Anspruch 15 die Schutzelemente durchdringende Koppelglieder aus zickzackförmig gebogenem Federband bewährt. Ein solcher Aufbau ermöglicht eine schnelle, einfache sowie preiswerte Montage und einen guten Zusammenhalt.

Die weiteren Ausbildungen der Ansprüche 15 bis 17 haben sich bezüglich der Form und Anordnung der Koppelglieder im praktischen Betrieb als besonders zweckmäßig erwiesen. Derartige Koppelglieder können preiswert hergestellt werden, sind einfach sowie schnell montierbar und ermöglichen einen langzeitig störungsfreien Federbetrieb mit großem Bewegungsspielraum.

Statt einer besonders einfachen einteiligen Ausbildung der Schutzelemente gemäß Anspruch 18 kann gemäß den Ansprüchen 19 bis 22 eine mehrteilige Ausbildung der Schutzelemente zweckmäßig sein, um beispielsweise eine einfache Aufnahme von zickzackförmigen Koppelgliedern zu ermöglichen.

Gemäß Anspruch 23 kann die Federsteifigkeit in Längsrichtung der Schutzabdeckung variieren, um eine optimale Bewegungsverteilung auf die Schutzelemente zu erreichen und zu vermeiden, daß sich insbesondere bei schnellen Bewegungsabläufen zumindest anfänglich im wesentlichen nur die antriebsseitigen Schutzelemente bewegen.

Die weiteren Ausgestaltungen der Ansprüche 24 und 25 verbessern die Dichtigkeit und die Stabilität der Schutzabdeckung.

Nach den Ansprüchen 26 und 27 können die Schutzelemente völlig ohne gegenseitige Verbindungen ausgeführt sein. Wichtig ist dabei aber, daß sich zwischen ihnen geeignete Druckelemente befinden, die vorzugsweise mit jeweils einem der Verbindungsstege angrenzender Schutzelemente verbunden oder verbindbar sind.

In weiterer Ausgestaltung nach Anspruch 28 können für die Schutzelemente beispielsweise bandförmige Auszugsbegrenzungen vorgesehen sein, um auch dann einen gegenseitigen Zusammenhalt der Schutzelemente zu gewährleisten, wenn diese durch die federnden Koppelglieder nicht miteinander verbunden, sondern nur gegenseitig abgefedert sind.

Die Ansprüche 29 und 30 beinhalten zweckmäßige Materialien für die Schutzelemente und die federnden Koppelglieder.

Gemäß den Ansprüchen 31 bis 34 ist es zweckmäßig, die Schutzelemente mit geeigneten gegenseitigen Längsführungen auszubilden, um auf einfachem Wege eine einwandfreie Bewegungsführung in Längsrichtung der Schutzabdeckung zu erreichen. Die Längsführungen können auch geeignete Bewegungsbegrenzungen enthalten, um so auf einfache Weise einen ständig verschachtelten gegenseitigen Eingriffszustand der Schutzelemente sicherzustellern.

Eine übereinstimmende Ausbildung der Schutzelemente nach Anspruch 35 ist unter anderem mit Rücksicht auf niedrige Herstellungs- sowie Montage- und Lagerhaltungskosten besonders bevorzugt.

Gemäß Anspruch 36 kann in Abhängigkeit von den speziellen Einsatzbedingungen ein zusätzlicher Anbau von bewegungssynchronisierenden Scheren vorteilhaft sein.

Die Erfindung wird nachfolgend an zeichnerisch dargestellten Ausführungsbeispielen näher erläutert. Es zeigen:
- Fig. 1: eine erste Ausführungsform einer Schutzabdeckung nach der vorliegenden Erfindung mit deren benachbarte U-förmige Schutzelemente verbindenden einzelnen federnden Koppelgliedern in einer vereinfachten perspektivischen Ansicht,
- Fig. 2: in einer Detailansicht von Fig. 1 die benachbarte Schutzelemente verbindenden federnden Koppelglieder,
- Fig. 3: in einer vereinfachten perspektivischen Explosionsansicht eine zweite Ausführungsform einer Schutzabdeckung nach der vorliegenden Erfindung mit aus jeweils zwei L-förmigen Einzelteilen bestehenden U-förmigen Schutzelementen, die alle durch diese durchdringende zickzackförmige Koppelglieder verbunden sind,
- Fig. 4: die Schutzabdeckung aus Fig. 3 in ihrem zusammengebauten Zustand,
- Fig. 5: eine dritte Ausführungsform einer Schutzabdeckung nach der vorliegenden Erfindung mit zusätzlichen ineinandergreifenden bewegungsbegrenzenden Längsführungen und
- Fig. 6: ein federndes, zickzackförmiges Koppelglied mit kreissegmentförmigen Biegeösen.

Gemäß den Figuren ist eine in Längsrichtung 12 längenveränderliche Schutzabdeckung 10 für Maschinen aus einzelnen rinnenartigen bzw. U-förmigen, länglichen Schutzelementen 14 zusammengesetzt, deren Längsrichtungen rechtwinklig zur Längsrichtung 12 der Schutzabdeckung 10 verlaufen. Die Schutzelemente 14 weisen mit ihren offenen Seiten in Längsrichtung 12 der Schutzabdeckung 10 und sind ineinandergeschachtelt angeordnet. Dadurch ermöglichen sie eine teleskopische Verlängerung und Verkürzung der Schutzabdeckung 10.

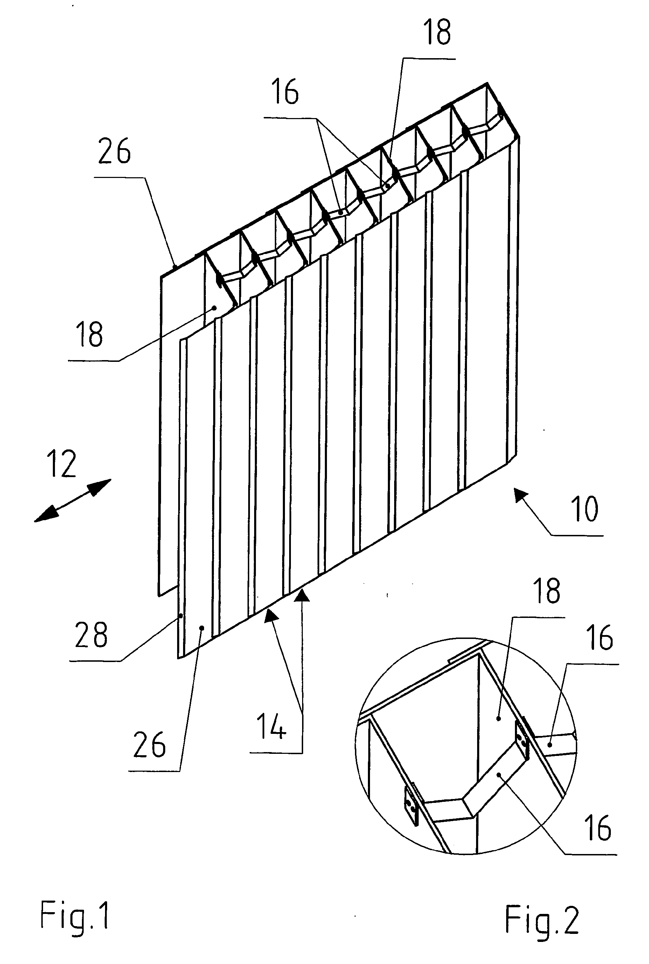

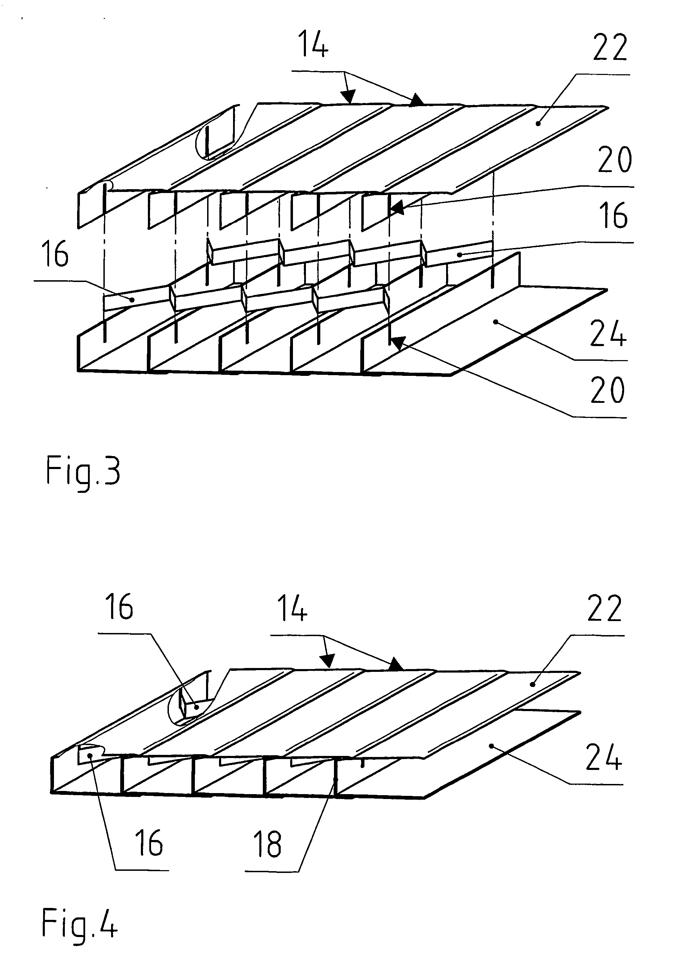

Die U-förmigen Schutzelemente können wie bei der ersten Ausführungsform aus den Figuren 1 und 2 einstückig ausgebildet oder wie bei der zweiten Ausführungsform aus den Figuren 3 und 4 aus mehreren Einzelteilen zusammengesetzt sein, wie aus jeweils zwei L-förmigen Einzelteilen 22 und 24.

Benachbarte Schutzelemente 14 sind durch federnde Koppelglieder 16 gegenseitig abgefedert. Diese können als Druckelemente, als Zugelemente oder als kombinierte Druck- und Zugelemente ausgebildet bzw. eingebaut sein. Bei einer Ausbildung oder Verwendung der Koppelglieder 16 als Zugelemente verbinden diese jeweils zwei benachbarte Schutzelemente 14, damit diese selbsttätig gleichmäßig zusammenziehen können. Bei einer Ausbildung oder Verwendung als Druckelemente können sie zwei benachbarte Schutzelemente 14 verbinden - es genügt in diesem Falle auch, sie lediglich puffernd zwischen den Schutzelementen anzuordnen und beispielsweise nur mit einem Schutzelement 14 aneinander angrenzender Schutzelemente zu verbinden. Auf diese Weise können sie die Schutzelemente 14 selbsttätig gleichmäßig auseinanderdrücken.

Bei den dargestellten Ausführungsformen können die federnden Koppelglieder 16 je nach Einbau der Schutzabdeckung 10 als Zug-, als Druck- oder als kombinierte Druck- und Zugelemente genutzt werden. Im letztgenannten Fall gibt es eine neutrale Zwischenstellung der Schutzabdeckung 10, in der die Koppelglieder 16 spannungsentlastet sind.

Bei der ersten Ausführungsform aus den Figuren 1 und 2 handelt es sich um einzelne, aus wechselseitig umgebogenem Federband, wie aus Kunststoff oder Federstahl, bestehende Koppelglieder 16, die jeweils zwei benachbarte Schutzelemente 14 im Bereich ihrer Verbindungsstege 18 miteinander verbinden und hieran festgelegt sind.

Bei der zweiten Ausführungsform aus den Figuren 3 und 4 bestehen lange Koppelglieder 16 aus mehrfach zickzackförmig umgebogenem Federband, wie aus Kunststoff oder Federstahl. Diese erstrecken sich im vorliegenden Fall über die gesamte Länge der Schutzabdekkung 10 und durchdringen schlitzförmige Durchbrüche 20 in den Verbindungsstegen 18 der Schutzelemente 14, mit denen sie an diesen Stellen kraftübertragend verbunden sind.

Bei der zweiten Ausführungsform sind die miteinander verbindbaren L-förmigen Einzelteile 22 und 24 mit randseitig offenen schlitzförmigen Durchbrüchen 20 ausgebildet. Die zickzackförmigen Koppelglieder 16 können bei der Montage im Bereich jeder zweiten Umbiegung in die Durchbrüche 20 eines der Einzelteile 22 oder 24 eingelegt und dort dann durch Aufbringen des zweiten Einzelteils 24 oder 22 gesichert werden.

Die zumindest in montiertem Zustand U-förmigen Schutzelemente 14 gleiten im Bereich ihrer Randstege 26 unter einem gewissen Auflagedruck aufeinander. Die Randstege 26 können randseitige Gleitlippen 28 aufweisen, die die Gleitverschiebungen begünstigen und die Dichtigkeit der Schutzabdeckung 10 verbessern.

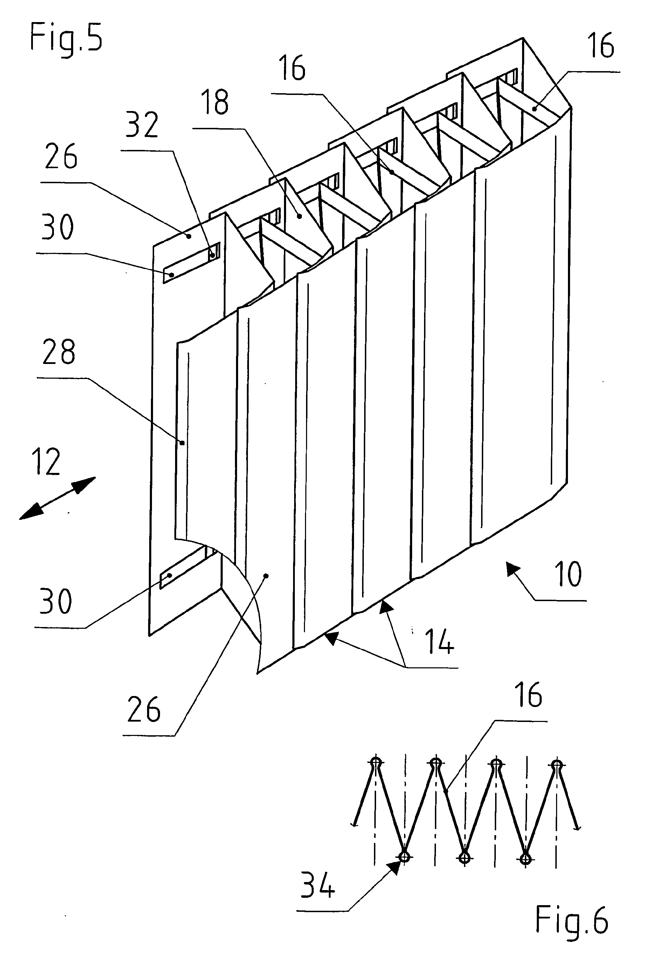

Bei der dritten Ausführungsform aus Figur 5 sind die Randstege 26 der Schutzelemente 14 mit Längsschlitzen 30 begrenzter Länge und mit randseitigen inneren Vorsprüngen 32 ausgebildet. Diese greifen jeweils von außen in einen Längsschlitz 30 des Randsteges 26 eines benachbarten Schutzelements 14 ein. Eine solche Ausbildung befindet sich vorzugsweise an beiden Enden der Schutzelemente 14. Hierdurch ergibt sich eine gute gegenseitige Längsführung der einzelnen Schutzelemente 14 in Verbindung mit einer Bewegungsbegrenzung in Auszugs- und Einschubrichtung der Schutzabdeckung 10.

Gemäß Figur 6 können die aus Federband, wie aus Kunststoff oder Federstahl, zickzackförmig gebogenen Koppelglieder 16 im Bereich ihrer Umbiegungen mit den Koppelgliedern einstückig ausgebildete kreissegmentförmige Biegeöse 34 aufweisen, die sich über einen Biegewinkel von mehr als 180 Grad und weniger als 360 Grad erstrecken. Diese Biegeöse 34 ermöglichen einen langzeitigen störungsfreien Federungsbetrieb und erlauben im Bereich der Durchbrüche 20 ein einfaches formschlüssiges, federungswirksames Verbinden mit den Verbindungsstegen 18 der Schutzelemente 14.

## Patentansprüche

1. Längenvariable, faltenbalgfreie Schutzabdeckung, insbesondere für Werkzeugmaschinen, mit länglichen, quer zur Längsrichtung der Schutzabdeckung verlaufenden Schutzelementen, die als separate U-förmige Glieder ausgebildet sowie gleichgerichtet angeordnet sind und mit ihren offenen Seiten in Längsrichtung (12) der Schutzabdeckung (10) weisen, wobei benachbarte Schutzelemente (14) ineinandergeschachtelt sowie quer zu ihrer eigenen Längsrichtung in Längsrichtung (12) der Schutzabdeckung (10) relativ zueinander verschiebbar sind und aufeinander gleiten, **dadurch gekennzeichnet, dass** die Schutzelemente (14) übereinstimmende Querschnittsabmessungen aufweisen und durch Verformbarkeit teilweise teleskopierbar ineinander schiebbar sind und dass benachbarte Schutzelemente (14) durch federnde Koppelglieder (16) in Längsrichtung (12) der Schutzabdeckung (10) gegenseitig abgefedert sind, wobei die Koppelglieder (16) aus wechselseitig umgebogenem Federband aus Kunststoff oder Federstahl bestehen.

2. Schutzabdeckung nach Anspruch 1, **dadurch gekennzeichnet, daß** die federnden Koppelglieder (16) als Druckelemente ausgebildet oder eingebaut und jeweils mit wenigstens einem von benachbarten Schutzelementen (14) verbunden oder verbindbar sind.

3. Schutzabdeckung nach Anspruch 1, **dadurch gekennzeichnet, daß** die federnden Koppelglieder (16) als Zugelemente ausgebildet oder eingebaut und jeweils mit beiden benachbarten Schutzelementen (14) verbunden oder verbindbar sind.

4. Schutzabdeckung nach Anspruch 1, **dadurch gekennzeichnet, daß** die federnden Koppelglieder (16) als Druck- und Zugelelemente eingerichtet oder eingebaut und jeweils mit beiden benachbarten Schutzelementen (14) verbunden oder verbindbar sind.

5. Schutzabdeckung nach einem der Ansprüche 1 bis 4, **dadurch gekennzeichnet, daß** die federnden Koppelglieder (16) als Blatt-, Schrauben- oder Tellerfedern ausgebildet sind.

6. Schutzabdeckung insbesondere nach Anspruch 1 oder 2, **dadurch gekennzeichnet, daß** die federnden Koppelglieder (16) als elastisch zusammendrückbare Druckpuffer ausgebildet sind.

7. Schutzabdeckung nach einem der Ansprüche 1 bis 6, **dadurch gekennzeichnet, daß** die federnden Koppelglieder (16) im Inneren der Schutzabdeckung (10) angeordnet sind.

8. Schutzabdeckung nach Anspruch 7, **dadurch gekennzeichnet, daß** die federnden Koppelglieder (16) jeweils zwischen den Verbindungsstegen (18) benachbarter Schutzelemente (14) angeordnet und mit wenigstens einem der Verbindungsstege (18) der U-förmigen Schutzelemente (14) verbunden oder verbindbar sind.

9. Schutzabdeckung nach einem der Ansprüche 1 bis 8, **dadurch gekennzeichnet, daß** jedem Schutzelement (14) wenigstens zwei federnde Koppelglieder (16) zugeordnet sind, die in Längsrichtung der Schutzelemente (14) einen gegenseitigen Abstand haben.

10. Schutzabdeckung nach Anspruch 9, **dadurch gekennzeichnet, daß** die wenigstens zwei federnden Koppelglieder (16) im Bereich der Enden der Schutzelemente (14) angeordnet sind.

11. Schutzabdeckung nach einem der Ansprüche 1 bis 10, **dadurch gekennzeichnet, daß** die federnden Koppelglieder (16) in Einbau-Ausgangslage der Schutzabdeckung (10) druck- bzw. zugentlastet sind.

12. Schutzabdeckung nach einem der Ansprüche 1 bis 10, **dadurch gekennzeichnet, daß** die federnden Koppelglieder (16) in Einbau-Ausgangslage der Schutzabdeckung unter Druck- oder Zugvorspannung stehen.

13. Schutzabdeckung nach einem der Ansprüche 1 bis 12, **dadurch gekennzeichnet, daß** die federnden Koppelglieder (16) Durchbrüche (20) in den Verbindungsstegen (18) mehrerer U-fömiger Schutzelemente (14) durchdringen und an den Durchdringungsstellen in Längsrichtung (12) der Schutzabdeckung (10) form- oder kraftschlüssig mit den Schutzelementen (14) verbunden sind.

14. Schutzabdeckung nach Anspruch 13, **dadurch gekennzeichnet, daß** sich die federnden Koppelglieder (16) etwa über die gesamte Länge der Schutzabdeckung (10) erstrekken.

15. Schutzabdeckung nach Anspruch 13 oder 14, **dadurch gekennzeichnet, daß** die federnden Koppelglieder (16) aus zickzackförmig umgebogenem Federband bestehen und im Bereich jeder zweiten Umbiegung schlitzförmige Durchbrüche (20) in den Verbindungsstegen (18) der U-förmigen Schutzelemente (14) durchdringen.

16. Schutzabdeckung nach Anspruch 15, **dadurch gekennzeichnet, daß** die Biegeachsen der Umbiegungen des Federbandes rechtwinklig zu den Längsrichtungen der Schutzabdeckung (10) und der Schutzelemente (14) verlaufen.

17. Schutzabdeckung nach Anspruch 15 oder 16, **dadurch gekennzeichnet, daß** die Umbiegungen des Federbandes als kreissegmenförmige Biegeösen mit einem Umbiegungswinkel von mehr als 180 Grad und weniger als 360 Grad ausgebildet sind.

18. Schutzabdeckung nach einem der Ansprüche 1 bis 17, **dadurch gekennzeichnet, daß** die U-förmigen Schutzelemente (14) einteilig ausgebildet sind.

19. Schutzabdeckung nach einem der Ansprüche 1 bis 17, **dadurch gekennzeichnet, daß** die U-förmigen Schutzelemente (14) jeweils aus mehreren Einzelteilen (22, 24) bestehen.

20. Schutzabdeckung nach Anspruch 19, **dadurch gekennzeichnet, daß** die U-förmigen Schutzelemente (14) jeweils aus zwei im Bereich ihrer Verbindungsstege (18) miteinander verbindbaren L-förmigen Einzelteilen (22, 24) bestehen.

21. Schutzabdeckung nach Anspruch 20, **dadurch gekennzeichnet, daß** wenigstens eines der L-förmigen Einzelteile (22, 24) eines Schutzelements (14) einen randseitig geöffneten Durchbruch (20), wie einen schlitzförmigen Durchbruch, aufweist, der zum Durchführen eines bandförmigen federnden Koppelgliedes (16) dient und von dem anderen L-förmigen Einzelteil (24, 22) des Schutzelements (14) verschließbar ist.

22. Schutzabdeckung nach Anspruch 21, **dadurch gekennzeichnet, daß** die schlitzförmigen Durchbrüche (20) quer zur Längsrichtung der Schutzelemente (14) und quer zur Längsrichtung (12) der Schutzabdeckung (10) verlaufen.

23. Schutzabdeckung nach einem der Ansprüche 1 bis 22, **dadurch gekennzeichnet, daß** die Federsteifigkeit der federnden Koppelglieder (16) in Längsrichtung (12) der Schutzabdeckung unterschiedlich ist.

24. Schutzabdeckung nach einem der Ansprüche 1 bis 23, **dadurch gekennzeichnet, daß** die freien Ränder bzw. Randstege (26) der U-förmigen Schutzelemente (14) jeweils unter Vorspannung auf dem angrenzenden Schutzelement (14) gleiten.

25. Schutzabdeckung nach Anspruch 24, **dadurch gekennzeichnet, daß** an den freien Rändern bzw. Randstegen (26) der U-förmigen Schutzelemente (14) Gleitlippen (28) angeordnet sind.

26. Schutzabdeckung nach einem der Ansprüche 1 bis 25 mit an beiden Enden der Schutzelemente in Längsrichtung der Schutzabdeckung geführten Schutzelementen, **dadurch gekennzeichnet, daß** die Schutzelemente (14) der in Längsrichtung (12) unter Druckvorspannung stehenden Schutzabdeckung (10) gegenseitig verbindungsfrei ausgeführt und ausschließlich durch als einzelne Druckelemente ausgebildete federnde Koppelglieder (16) gegenseitig abgefedert sind.

27. Schutzabdeckung nach Anspruch 26, **dadurch gekennzeichnet, daß** die federnden Koppelglieder (16) nur mit jeweils einem der Verbindungsstege (18) angrenzender Schutzelemente (14) verbunden oder verbindbar ist.

28. Schutzabdeckung nach einem der Ansprüche 1 bis 27, **dadurch gekennzeichnet, daß** die jeweils benachbarten Schutzelemente (14) durch mit ihren Verbindungsstegen (18) verbundene Auszugbegrenzungen, wie Zugbänder, verbunden sind.

29. Schutzabdeckung nach einem der Ansprüche 1 bis 28, **dadurch gekennzeichnet, daß** die Schutzelemente (14) aus Metall und/oder Kunststoff bestehen.

30. Schutzabdeckung nach einem der Ansprüche 1 bis 29, **dadurch gekennzeichnet, daß** die federnden Koppelglieder (14) aus Metall, Kunststoff oder gummiartig federndem Material bestehen.

31. Schutzabdeckung nach einem der Ansprüche 1 bis 30, **dadurch gekennzeichnet, daß** jeweils benachbarte Schutzelemente (14) im Bereich ihrer freien Randstege (26) in Längsrichtung (12) der Schutzabdeckung (10) wirkende gegenseitige Längsführungen (30, 32) aufweisen.

32. Schutzabdeckung nach Anspruch 31, **dadurch gekennzeichnet, daß** wenigstens zwei Längsführungen (30, 32) im Bereich der Enden der Schutzelemente (14) angeordnet sind.

33. Schutzabdeckung nach Anspruch 31 oder 32, **dadurch gekennzeichnet, daß** die Längsführungen (30, 32) zusätzlich mit Bewegungsbegrenzungen in Auszugs- und/oder Einschubrichtung der Schutzabdeckung (10) ausgebildet sind.

34. Schutzabdeckung nach einem der Ansprüche 31 bis 33 mit einer Maschinenseite und einer maschinenabgewandten Seite, **dadurch gekennzeichnet, daß** die freien Randstege (26) zumindest an der maschinenabgewandten Seite mit innenseitigen Vorsprüngen (32) sowie Längsschlitzen (30) ausgebildet sind und daß die Vorsprünge (32) der Schutzelemente (14) in die Längsschlitze (30) der jeweils benachbarten Schutzelemente (14) eingreifen.

35. Schutzabdeckung nach einem der Ansprüche 1 bis 34, **dadurch gekennzeichnet, daß** die Schutzelemente (14) durch entsprechende Formgebung teilweise ineinanderschiebbar ausgebildet sind.

36. Schutzabdeckung nach einem der Ansprüche 1 bis 35 mit einer Maschinenseite und einer maschinenabgewandten Seite, **dadurch gekennzeichnet, daß** wenigstens eine an der maschinenabgewandten Seite in Längsrichtung (12) der Schutzabdeckung (10) angeordnete, bewegungssynchronisierende Schere jeweils Gruppen mehrerer Schutzelemente (14) überdrückt und mit je einem Schutzelement (14) einer jeden Gruppe antriebsmäßig verbunden ist.

## Claims

1. A variable length bellows-free protective covering, in particular for machine tools, with elongate protective elements which extend transversely to the longitudinal direction of the protective covering and which are in the form of separate U-shaped members and are equidirectionally arranged, and with their open ends point in the longitudinal direction (12) of the protective covering (10), wherein adjacent protective elements (14) are fitted into one another and are displaceable relative to one another transversely to their own longitudinal direction in the longitudinal direction (12) of the protective covering (10) and slide on one another, **characterised in that** the protective elements (14) are of corresponding cross-sectional dimensions and can be displaced into one another partly telescopically owing to their deformability, and **in that** adjacent protective elements (14) are mutually cushioned in the longitudinal direction (12) of the protective covering (10) by resilient coupling members (16), wherein the coupling members (16) comprise alternately bent spring strip consisting of plastics material or spring steel.

2. A protective covering unit according to Claim 1, **characterised in that** the resilient coupling members (16) are formed or built in as compression elements and in each case are connected or can be connected to at least one of adjacent protective elements (14).

3. A protective covering according to Claim 1, **characterised in that** the resilient coupling members (16) are formed or built in as tension elements and in each case are connected or can be connected to both adjacent protective elements (14).

4. A protective covering according to Claim 1, **characterised in that** the resilient coupling members (16) are set up or built in as compression and tension elements and in each case are connected or can be connected to both adjacent protective elements (14).

5. A protective covering according to any one of Claims 1 to 4, **characterised in that** the resilient coupling members (16) are in the form of leaf springs, coil springs or disc springs.

6. A protective covering according to Claim 1 or 2, **characterised in that** the resilient coupling members (16) are in the form of elastically compressible pressure buffers.

7. A protective covering according to any one of Claims 1 to 6, **characterised in that** the resilient coupling members (16) are arranged inside the protective covering (10).

8. A protective covering according to Claim 7, **characterised in that** the resilient coupling members (16) are each arranged between the connecting webs (18) of adjacent protective elements (14) and are connected or can be connected to at least one of the connecting webs (18) of the U-shaped protective elements (14).

9. A protective covering according to any one of Claims 1 to 8, **characterised in that** each protective element (14) is associated with at least two resilient coupling members (16) which have a mutual distance apart in the longitudinal direction of the protective elements (14).

10. A protective covering according to Claim 9, **characterised in that** the at least two resilient coupling members (16) are arranged in the vicinity of the ends of the protective elements (14).

11. A protective covering according to any one of Claims 1 to 10, **characterised in that**, in the installation starting position of the protective covering (10), the resilient coupling members (16) are relieved of compression or tension.

12. A protective covering according to any one of Claims 1 to 10, **characterised in that**, in the installation starting position of the protective covering, the resilient coupling members (16) are under compressive or tensile preloading.

13. A protective covering according to any one of Claims 1 to 12, **characterised in that** the resilient coupling members (16) pass through openings (20) in the connecting webs (18) of a plurality of U-shaped protective elements (14) and at the passage locations in the longitudinal direction (12) of the protective covering (10) are connected in a form-locking or force-locking manner to the protective elements (14).

14. A protective covering according to Claim 13, **characterised in that** the resilient coupling members (16) extend approximately over the entire length of the protective covering (10).

15. A protective covering according to Claim 13 or 14, **characterised in that** the resilient coupling members (16) comprise zig-zag bent spring strip and in the vicinity of each second bend they pass through slot-shaped openings (20) in the connecting webs (18) of the U-shaped protective elements (14).

16. A protective covering according to Claim 15, **characterised in that** the bending axes of the bends of the spring strip extend at right angles to the longitudinal directions of the protective covering (10) and the protective elements (14).

17. A protective covering according to Claim 15 or 16, **characterised in that** the bends in the spring strip are in the form of circular segment-like bend eyes with a bending angle of more than 180 degrees and less than 360 degrees.

18. A protective covering according to any one of Claims 1 to 17, **characterised in that** the U-shaped protective elements (14) are formed in one piece.

19. A protective covering according to any one of Claims 1 to 17, **characterised in that** the U-shaped protective elements (14) each comprise a plurality of individual parts (22,24).

20. A protective covering according to Claim 19, **characterised in that** the U-shaped protective elements (14) each comprise two L-shaped individual parts (22,24) which can each be joined together in the vicinity of their connecting webs (18).

21. A protective covering according to Claim 20, **characterised in that** at least one of the L-shaped individual parts (22,24) of a protective element (14) has an opening (20) open at the periphery, such as a slot-shaped opening, which serves for the passage of a strip-like resilient coupling element (16) and can be closed by the other L-shaped individual part (22,24) of the protective element (14).

22. A protective covering according to Claim 21, **characterised in that** the slot-shaped openings (20) extend transversely to the longitudinal direction of the protective elements (14) and transversely to the longitudinal direction (12) of the protective covering (10).

23. A protective covering according to any one of Claims 1 to 22, **characterised in that** the spring stiffness of the resilient coupling members (16) is different in the longitudinal direction (12) of the protective covering.

24. A protective covering according to any one of Claims 1 to 23, **characterised in that** the free edges or edge webs (26) of the U-shaped protective elements (14) each slide under preloading on the adjoining protective elements (14).

25. A protective covering according to Claim 24, **characterised in that** slide lips (28) are disposed on the free edges or edge webs (26) of the U-shaped protective elements (14).

26. A protective covering according to any one of Claims 1 to 25 with protective elements guided at both ends of the protective elements in the longitudinal direction of the protective covering, **characterised in that** the protective elements (14) of the protective covering (10), which is under compressive preloading in the longitudinal direction (12), are designed to be mutually connection-free and are mutually cushioned exclusively by resilient coupling elements (16) formed as individual compression elements.

27. A protective covering according to Claim 26, **characterised in that** the resilient coupling elements (16) are connected or can be connected only to a respective one of the protective elements (14) adjoining the connecting webs (18).

28. A protective covering according to any one of Claims 1 to 27, **characterised in that** the respective adjacent protective elements (14) are connected by extension boundaries, such as tension strips, connected to their connecting webs (18).

29. A protective covering according to any one of Claims 1 to 28, **characterised in that** the protective elements (14) consist of metal and/or plastics material.

30. A protective covering according to any one of Claims 1 to 29, **characterised in that** the resilient coupling elements (16) consist of metal, plastics material or rubber-type resilient material.

31. A protective covering according to any one of Claims 1 to 30, **characterised in that**, in the vicinity of free edge webs (26), the respective adjacent protective elements (14) have mutual longitudinal guides (30,32) acting in the longitudinal direction (12) of the protective covering (10).

32. A protective covering according to Claim 31, **characterised in that** at least two longitudinal guides (30,32) are provided in the vicinity of the ends of the protective elements (14).

33. A protective covering according to Claim 31 or 32, **characterised in that** the longitudinal guides (30,32) are additionally formed with motion limits in the extension and/or retraction direction of the protective covering (10).

34. A protective covering according to any one of Claims 31 to 33 with a machine side and a side remote from the machine, **characterised in that** the free edge webs (26) are formed at least on the side remote from the machine with internal projections (32) and longitudinal slots (30), and **in that** the projections (32) of the protective elements (14) engage into the longitudinal slots (30) of the respective adjacent protective elements (14).

35. A protective covering according to any one of Claims 1 to 34, **characterised in that** by appropriate shaping the protective elements (14) are formed so that they can be partly nested.

36. A protective covering according to any one of Claims 1 to 35 with a machine side and a side remote from the machine, **characterised in that** at least one motion-synchronising swing frame disposed on the side remote from the machine in the longitudinal direction (12) of the protective cover (10) spans respective groups of several protective elements (14) and is connected for drive purposes to each protective element (14) of each group.

## Revendications

1. Couverture de protection de longueur variable, sans soufflet pliant, notamment pour des machines outils, ayant des éléments protecteurs allongés, dirigés transversalement à la direction longitudinale de la couverture de protection, constitués par des éléments séparés en forme de U, installés dans le même sens et dont les côtés ouverts sont dirigés dans la direction longitudinale (12) de la couverture de protection (10),
* les éléments protecteurs (14), voisins, étant emboités et coulissants les uns par rapport aux autres dans la direction longitudinale (12) de la couverture de protection (10), transversalement à leur propre direction longitudinale, et glissant l'un sur l'autre,
la couverture **caractérisée en ce que**
- les éléments protecteurs (14) ont des dimensions de section qui se correspondent et ils peuvent coulisser l'un dans l'autre de manière partiellement télescopique par déformation, et
- les éléments protecteurs (14), voisins, sont soutenus élastiquement l'un par rapport à l'autre par des éléments de couplage (16), élastiques dans la direction longitudinale (12) de la couverture de protection (10),
- les organes de couplage (16) étant réalisés en un ruban à ressort en matière plastique ou en acier à ressort replié de manière alternée d'un côté et de l'autre.

2. Couverture de protection selon la revendication 1,
**caractérisée en ce que**
les organes de couplage élastiques (16) sont réalisés sous la forme d'éléments de poussée ou sont intégrés en tant que tels et sont reliés ou peuvent être reliés respectivement à au moins l'un des éléments protecteurs voisins (14).

3. Couverture de protection selon la revendication 1,
**caractérisée en ce que**
les organes de couplage élastiques (16) sont réalisés sous la forme d'éléments de traction ou sont montés en tant que tels et sont reliés ou peuvent être reliés aux éléments protecteurs voisins (14).

4. Couverture de protection selon la revendicaltion 1,
**caractérisée en ce que**
les organes de couplage élastiques (16) sont conçus ou sont réalisés comme des éléments de pression ou de traction et sont reliés ou peuvent être reliés respectivement aux deux éléments protecteurs voisins (14).

5. Couverture de protection selon l'une des revendications 1 à 4,
**caractérisée en ce que**
les organes de couplage élastiques (16) sont réalisés sous la forme de ressorts-lames, de ressorts hélicoïdaux ou de ressorts Belleville.

6. Couverture de protection notamment selon l'une des revendications 1 ou 2,
**caractérisée en ce que**
les organes de couplage élastiques (16) sont des tampons pression qui peuvent être comprimés élastiquement.

7. Couverture de protection selon l'une des revendications 1 à 6,
**caractérisée en ce que**
les organes de couplage élastiques (16) sont installés dans la couverture de protection (10).

8. Couverture de protection selon la revendication 7,
**caractérisée en ce que**
les organes de couplage élastiques (16) sont installés chaque fois entre les âmes (18) d'éléments protecteurs (14) voisins et sont ou peuvent être reliés à au moins l'une des âmes (18) de l'élément protecteur (14) en forme de U.

9. Couverture de protection selon l'une des revendications 1 à 8,
**caractérisée en ce que**
chaque élément protecteur (14) est associé à au moins deux organes de couplage élastiques (16) ayant un écartement réciproque dans la direction longitudinale de l'élément protecteur (14).

10. Couverture de protection selon la revendication 9,
**caractérisée en ce qu'**
au moins les deux organes de couplage (16) sont installés dans la zone des extrémités des éléments de couplage (14).

11. Couverture de protection selon l'une des revendications 1 à 10,
**caractérisée en ce que**
les organes de couplage élastiques (16) sont déchargés en pression ou en traction en position de sortie de démontage de la couverture de protection (10).

12. Couverture de protection selon l'une des revendications 1 à 10,
**caractérisée en ce que**
les organes de couplage (16) élastiques sont mis en compression ou de traction pour la position de sortie de démontage de la couverture de protection.

13. Couverture de protection selon l'une des revendications 1 à 12,
**caractérisée en ce que**
les organes de couplage élastiques (16) traversent des passages (20) des âmes (18) de plusieurs éléments protecteurs (14) en forme de U et aux points de passage, ils sont reliés dans la direction longitudinale (12) de la couverture de protection (10) par une liaison par la forme ou par la force aux éléments protecteurs (14).

14. Couverture de protection selon la revendication 13,
**caractérisée en ce que**
les organes de couplage élastiques (16) s'étendent pratiquement sur toute la longueur de la couverture de protection (10).

15. Couverture de protection selon la revendication 13 ou 14,
**caractérisée en ce que**
les organes de couplage élastiques (16) sont réalisés sous la forme d'un ruban à ressort replié en zigzag et ils traversent des passages (20) en forme de fente dans les âmes (18) des éléments protecteurs (14) en forme de U au niveau de chaque second pliage.

16. Couverture de protection selon la revendication 15,
**caractérisée en ce que**
les axes de pliage du ruban à ressort sont perpendiculaires à la direction longitudinale de la couverture de protection (10) et des éléments protecteurs (14).

17. Couverture de protection selon la revendication 15 ou 16,
**caractérisée en ce que**
les pliages du ruban à ressort sont des oeillets de pliage en forme de segment de cercle avec un angle de cintrage supérieur à 180° et inférieur à 360°.

18. Couverture de protection selon l'une des revendications 1 à 17,
**caractérisée en ce que**
les éléments protecteurs (14) en forme de U sont en une seule pièce.

19. Couverture de protection selon l'une des revendications 1 à 17,
**caractérisée en ce que**
les éléments protecteurs (14) en forme de U sont constitués chacun de plusieurs pièces séparées (22, 24).

20. Couverture de protection selon la revendication 19,
**caractérisée en ce que**
les éléments protecteurs (14) en forme de U se composent chacun de deux pièces séparées (22, 24) en forme de L, qui sont reliées dans la zone de leur âme (18).

21. Couverture de protection selon la revendication 20,
**caractérisée en ce qu'**
au moins l'une des pièces séparées (22, 24) en forme de U d'un élément protecteur (14) comporte un passage (20) dont le bord est ouvert ainsi qu'un passage en forme de fente pour la traversée d'un organe de couplage élastique (16) en forme de ruban et qui sera fermé par l'autre pièce séparée (24, 22) en forme de L de l'élément protecteur (14).

22. Couverture de protection selon la revendication 21,
**caractérisée en ce que**
les passages en forme de fente (20) sont dirigés transversalement à la direction longitudinale des éléments protecteurs (14) et transversalement à la direction longitudinale (12) de la couverture de protection (10).

23. Couverture de protection selon l'une des revendications 1 à 22,
**caractérisée en ce que**
la rigidité des organes de couplage élastiques (16) est variable dans la direction longitudinale (12) de la couverture de protection.

24. Couverture de protection selon l'une des revendications 1 à 23,
**caractérisée en ce que**
les bords libres ou les côtés (26) des éléments protecteurs (14) en forme de U glissent sur l'élément protecteur (14) adjacent chaque fois avec précontrainte.

25. Couverture de protection selon la revendication 24,
**caractérisée en ce que**
les bords libres ou les côtés (26) des éléments protecteurs (14) en forme de U ont des lèvres de glissement (28).

26. Couverture de protection selon l'une des revendications 1 à 25 ayant des éléments protecteurs guidés des deux côtés des éléments protecteurs dans la direction longitudinale de ceux-ci,
couverture **caractérisée en ce que**
les éléments protecteurs (14) de la couverture de protection (10) sont sous une contrainte de compression dans la direction longitudinale (12) en étant réalisés sans liaison réciproque et en étant soutenus élastiquement réciproquement par des organes de couplage (16) réalisés sous la forme d'éléments de compression séparés.

27. Couverture de protection selon la revendication 26,
**caractérisée en ce que**
les organes de couplage élastiques (16) ne sont reliés ou ne peuvent être reliés chaque fois qu'à l'une des âmes (18) des éléments protecteurs (14) adjacents.

28. Couverture de protection selon l'une des revendications 1 à 27,
**caractérisée en ce que**
les éléments protecteurs (14) respectivement adjacents sont reliés par des éléments de limitation d'extension tels que des rubans de traction reliés aux âmes (18).

29. Couverture de protection selon l'une des revendications 1 à 28,
**caractérisée en ce que**
les éléments protecteurs (14) sont en métal et/ou en matière plastique.

30. Couverture de protection selon l'une des revendications 1 à 29,
**caractérisée en ce que**
les organes de couplage élastiques (16) sont en métal, en matière plastique ou en une matière élastique comme du caoutchouc.

31. Couverture de protection selon l'une des revendications 1 à 30,
**caractérisée en ce que**
les éléments protecteurs (14) chaque fois voisins ont dans la zone de leur côté libre (26), des guidages longitudinaux réciproques (30, 32) agissant dans la direction longitudinale (12) de la couverture de protection (10).

32. Couverture de protection selon la revendication 31,
**caractérisée par**
au moins deux guidages longitudinaux (30, 32) au niveau des extrémités des éléments protecteurs (14).

33. Couverture de protection selon les revendications 31 ou 32,
**caractérisée en ce que**
les guides longitudinaux (30, 32) sont munis en plus de limites de mouvement dans la direction d'extension et/ou de compression de la couverture de protection (10).

34. Couverture de protection selon l'une des revendications 31 à 33 comportant un côté machine et un côté opposé à la machine, **caractérisée en ce que**
- les côtés libres (26), au moins du côté non tourné vers la machine, sont munis de saillies (32) côté intérieur et de fentes longitudinales (30), et
- les saillies (32) des éléments protecteurs (14) pénètrent dans les fentes longitudinales (30) des éléments protecteurs (14) respectivement voisins.

35. Couverture de protection selon l'une des revendications 1 à 34,
**caractérisée en ce que**
les éléments protecteurs (14) sont partiellement télescopiques par une mise en forme appropriée.

36. Couverture de protection selon l'une des revendications 1 à 35 comportant un côté tourné vers la machine et un côté opposé à la machine,
**caractérisée en ce qu'**
au moins un côté opposé à la machine dans la direction longitudinale (12) de la couverture de protection (10) chevauche des ciseaux synchronisés en mouvement de groupes respectifs de plusieurs éléments protecteurs (14) en étant reliés dans le sens de l'entraînement à chaque fois un élément protecteur (14) de chaque groupe.
